# EUROPEAN PATENT APPLICATION

(11) **EP 3 825 366 A1**
(43) Date of publication of application: **26.05.2021**
(21) Application number: 19837811.9
(22) Date of filing: 11.07.2019
(51) Int. Cl.: C09D 11/328, B41J 2/01, B41M 5/00, D06P 1/16, D06P 5/30

(54) **INK COMPOSITION FOR INKJET TEXTILE PRINTING AND TEXTILE PRINTING METHOD FOR HYDROPHOBIC FIBER**

(30) Priority: 18.07.2018 JP 2018135029
(71) Applicant: Nippon Kayaku Kabushiki Kaisha, Tokyo 100-0005 (JP)
(72) Inventor: AKANUMA, Rima, Tokyo 115-8588 (JP); SASAKI, Keijyou, Tokyo 115-8588 (JP); FUJII, Katsunori, Tokyo 115-8588 (JP); HIGUCHI, Hiroko, Tokyo 115-8588 (JP); TERANISHI, Makoto, Tokyo 115-8588 (JP)
(74) Representative: Parchmann, Stefanie
(86) International application number: PCT/JP2019/027547
(87) International publication number: WO 2020/017431

(57) **Abstract**

Provided are: an ink composition for inkjet printing, the ink composition containing a linear diol compound which has 4 or more carbon atoms and has hydroxide groups on both ends in the molecular structure thereof, a dispersing dye and a dispersant; and a textile printing method for a hydrophobic fiber by using said ink composition for inkjet printing.

## Description

### TECHNICAL FIELD

The present invention relates to an ink composition for inkjet textile printing and a method for textile printing of hydrophobic fibers using the same.

### BACKGROUND ART

In recent years, there has been proposed a recording method for performing plate-less printing by inkjet, and textile printing by inkjet printing (inkjet textile printing) has also been performed in the printing of fibers including cloth, etc. Textile printing by inkjet printing has various advantages such as plate-free, resource saving, energy saving, and easy high-definition expression, compared to conventional textile printing methods such as screen printing, etc.

Here, hydrophobic fibers typified by polyester fibers are generally dyed by a water-insoluble coloring material. For this reason, as an aqueous ink for textile printing of hydrophobic fibers by inkjet printing, it is generally necessary to use dispersed inks, in which a water-insoluble coloring matter is dispersed in water, and which have good performance such as dispersion stability.

Inkjet textile printing methods for hydrophobic fibers are roughly divided into direct printing and sublimation transfer methods. The direct printing method is a textile printing method in which ink is directly applied (printed) to a hydrophobic fiber, and then a dye in the ink is heat treated by high temperature steaming or the like, so that the dye is dyed and fixed to the hydrophobic fiber. On the other hand, the sublimation transfer method is a textile printing method in which ink is applied (printed) to an intermediate recording medium (a special transfer paper, etc.), then an ink application surface of the intermediate recording medium and a hydrophobic fiber are superimposed on each other, and then a dye is transferred by heat from the intermediate recording medium to the hydrophobic fiber.

The sublimation transfer method is mainly used for printing of banner flags, etc. and easily sublimating dyes which are excellent in transferability to hydrophobic fibers by heat treatment are used in the ink. The processing steps include the two steps of (1) a printing step: a step of applying a dye ink to an intermediate recording medium by an inkjet printer; and (2) a transfer step: a step of transferring and dyeing the dye from the intermediate recording medium to the fiber by heat treatment. Since commercially available transfer papers can be widely used, pretreatment of fibers is not required, and a washing step is also omitted.

As an ink for use in the sublimation transfer method, an aqueous ink in which a water-insoluble sublimable dye is dispersed in water has been generally used. For example, Patent Documents 1 and 2 disclose that an ink is prepared by adding a water-soluble organic solvent as a humectant (a drying inhibitor), a surfactant as a surface tension modifier, and other additives (a pH adjusting agent, an antiseptic and antifungal agent, a defoaming agent, etc.) to a dye dispersion obtained by dispersing a sublimable dye selected from a disperse dye and an oil-soluble dye in water using a dispersant, followed by optimizing physical properties such as particle size, viscosity, surface tension, and pH.

Incidentally, in inkjet printing, it is important that ink can be discharged stably from a plate of a print head on which nozzles are arrayed. However, in the case of an aqueous ink, evaporation of water from the ink easily causes ejection trouble. For example, ink may evaporate and solidify in the vicinity of a nozzle or a plate, thereby causing non-ejection of ink or causing disruption of the printed matter in some cases.

Therefore, it is required that inks be good in redispersibility (performance in which the dried ink is softened by the ink itself and redispersed). When the inkjet printer is interrupted for a long time or shut down, the ink dries in the head or in the printer channel, and an ink inferior in redispersibility may clog the nozzle and cause discharge failure or discharge twist.

Further, it is also required that inks be good in performance (initial ejection property) that ink can be ejected without pin missing even when printing is performed immediately after ink charge into an inkjet printer, and performance (intermittent ejection property) that ink can be ejected even when printing is performed even after a long intermittent interval. When these performances cannot be maintained, ejection missing occurs in the image on the recording medium, which affects the quality of the printed matter.

Thus, there has been a need for ink which sufficiently satisfies redispersibility, initial ejection property, and intermittent ejection property (see Patent Documents 5 and 6).

In addition, some recording media used in inkjet processing in recent years have fast ink drying performance. This is because, due to an increase in speed of inkjet printing, it is required that wrinkling when winding a recording medium after printing be suppressed, and that the resulting printed matter has a higher print density, as prescribed properties. However, in a recording medium having fast ink drying performance, ink quickly penetrates into the inside of the recording medium, the ink tends not to stay on the surface of the recording medium, and the ink is poor at wetting and does not easily spread. Therefore, there is also a problem that dots after ink ejection do not sufficiently spread, so that white streaks occur, in which the surface of the recording medium is exposed.
Patent Document 1: Japanese Unexamined Patent Application, Publication No. 2007-238687
Patent Document 1: PCT International Publication No. WO2005/121263
Patent Document 2: Japanese Unexamined Patent Application, Publication No. 2018-58962
Patent Document 3: Japanese Patent No. 6009948
Patent Document 4: Japanese Unexamined Patent Application, Publication No. 2004-107631
Patent Document 5: Japanese Unexamined Patent Application, Publication No. 2008-201977
Patent Document 6: Japanese Patent No. 4501613
Patent Document 7: Japanese Patent No. 5655553

### DISCLOSURE OF THE INVENTION

### Problems to be Solved by the Invention

It is an object of the present invention to provide an ink composition for inkjet textile printing which has good redispersibility, initial ejection property, intermittent ejection property, and reduced generation of streaks on a recording medium and by which a high-quality printed product can be obtained; and a method for textile printing of a hydrophobic fiber using the same.

### Means for Solving the Problems

As a result of extensive studies to solve the above problems, the present inventors have completed the following first to nineteenth aspects of the present invention.

A first aspect of the present invention relates to an ink composition for inkjet textile printing, containing a straight chain diol compound having at least four carbon atoms and having hydroxy groups at both ends in the molecular structure thereof, a disperse dye, and a dispersant.

A second aspect of the present invention relates to the ink composition for inkjet textile printing as described in the first aspect, in which the straight chain diol compound includes at least one type selected from the group consisting of 1,6-hexanediol, diethylene glycol, triethylene glycol, tetraethylene glycol, and polyethylene glycol.

A third aspect of the present invention relates to the ink composition for inkjet textile printing as described in the first or second aspect, in which the straight chain diol compound includes at least one type selected from the group consisting of 1,6-hexanediol and triethylene glycol.

A fourth aspect of the present invention relates to the ink composition for inkjet textile printing as described in any one of the first to third aspects, in which the content of the straight chain diol compound is 0.5 to 10 % by mass.

A fifth aspect of the present invention relates to the ink composition for inkjet textile printing as described in any one of the first to fourth aspects, in which the disperse dye is a sublimable dye.

A sixth aspect of the preset invention relates to the ink composition for inkjet textile printing as described in any one of the first to fifth aspects, in which the disperse dye is at least one type selected from the group consisting of C.I. Disperse Yellow, C.I. Disperse Orange, C.I. Disperse Blue, C.I. Disperse Red, C.I. Disperse Violet, C.I. Disperse Green, C.I. Disperse Brown, and C.I. Disperse Black.

A seventh aspect of the preset invention relates to the ink composition for inkjet textile printing as described in any one of the first to sixth aspects, in which the disperse dye is at least one type selected from the group consisting of C.I. Disperse Yellow 54, C.I. Disperse Blue 359, C.I. Disperse Blue 360, and C.I. Disperse Red 60.

An eighth aspect of the present invention relates to the ink composition for inkjet textile printing as described in any one of the first to seventh aspects, in which the disperse dye includes C.I. Disperse Yellow 54, C.I. Disperse Blue 359, C.I. Disperse Blue 360, and C.I. Disperse Red 60.

A ninth aspect of the present invention relates to the ink composition for inkjet textile printing as described in any one of the first to eighth aspects, in which the dispersant is a styrene-(meth)acrylic copolymer or a formalin condensate of an aromatic sulfonic acid or a salt thereof.

A tenth aspect of the present invention relates to the ink composition for inkjet textile printing as described in the ninth aspect, in which a mass average molecular weight of the styrene-(meth)acrylic copolymer is 1,000 to 20,000.

An eleventh aspect of the present invention relates to the ink composition for inkjet textile printing as described in the ninth aspect, in which a mass average molecular weight of the styrene-(meth)acrylic copolymer is 2,000 to 19,000.

A twelfth aspect of the present invention relates to the ink composition for inkjet textile printing as described in the ninth aspect, in which a mass average molecular weight of the styrene-(meth)acrylic copolymer is 4,000 to 17,000.

A thirteenth aspect of the present invention relates to the ink composition for inkjet textile printing as described in the ninth aspect, in which the formalin condensate of an aromatic sulfonic acid is at least one type selected from the group consisting of a formalin condensate of creosote oil sulfonic acid and a formalin condensate of methylnaphthalene sulfonic acid.

A fourteenth aspect of the present invention relates to the ink composition for inkjet textile printing as described in any one of the first to thirteenth aspects, in which the ink composition contains a water-soluble organic solvent.

A fourteenth aspect of the present invention relates to the ink composition for inkjet textile printing as described in any one of the first to fourteenth aspects, in which the ink composition contains water.

A sixteenth aspect of the present invention relates to a method for textile printing of a hydrophobic fiber, including: an attaching step of using the ink composition for inkjet printing as described in any one of the first to fifteenth aspects as an ink and attaching a droplet of the ink to a hydrophobic fiber by an inkjet printer; a fixing step of fixing a dye in the ink attached to the hydrophobic fiber in the attaching step to the hydrophobic fiber by heat; and a washing step of washing an unfixed dye remaining in the hydrophobic fiber.

A seventeenth aspect of the present invention relates to the method for textile printing of a hydrophobic fiber as described in the sixteenth aspect, in which the method further includes a pretreating step of pretreating by applying an aqueous solution containing a sizing material, an alkaline substance, a reduction inhibitor, and a hydrotropic agent to the hydrophobic fiber before the ink is attached.

An eighteenth aspect of the present invention relates to a method for textile printing of a hydrophobic fiber, including: a printing step of using the ink composition for inkjet printing as described in any one of the first to fifteenth aspects as an ink and printing by attaching a droplet of the ink to an intermediate recording medium by an inkjet printer to obtain a recorded image; and a transfer step of transferring the recorded image to the hydrophobic fiber by contacting the hydrophobic fiber with a surface to which the ink is attached in the intermediate recording medium, followed by heat treatment.

A nineteenth aspect of the present invention relates to a dyed hydrophobic fiber obtained by the method for textile printing of a hydrophobic fiber, as described in any one of the sixteenth to eighteenth aspect.

### Effects of the Invention

According to the present invention, it is possible to provide an ink composition for inkjet textile printing, which is excellent in redispersibility, initial ejection property, and intermittent ejection property, which suppresses generation of streaks on the recording medium, and by which a printed product of high quality can be obtained; and a method for printing of a hydrophobic fiber using the same.

### PREFERRED MODE FOR CARRYING OUT THE INVENTION

### <Ink Composition for Inkjet textile printing>

The ink composition for inkjet textile printing (hereinafter, simply referred to as "ink composition") according to the present embodiment comprises a straight chain diol compound having at least four carbon atoms and having hydroxy groups at both ends in the molecular structure thereof, a disperse dye, and a dispersant. Hereinafter, each component contained in the ink composition as described in the present embodiment will be described.

### [Straight Chain Diol Compounds]

The ink composition according to the present embodiment contains a straight chain diol compound having at least four carbon atoms and having hydroxy groups at both ends in the molecular structure thereof. Examples of the straight chain diol compound include diethylene glycol, triethylene glycol, tetraethylene glycol, polyethylene glycol, 1,4-butanediol, 1,5-pentanediol, 1,6 hexanediol, 1,7-heptanediol, 1,8-octanediol, 1,9-nonanediol, etc. Among these, 1,6-hexanediol, diethylene glycol, triethylene glycol, tetraethylene glycol, and polyethylene glycol are preferred, and 1,6-hexanediol and triethylene glycol are more preferred. One type of the straight chain diol compound may be used alone, and two or more types thereof may be used in combination.

The content of the straight chain diol compound in the ink composition is, for example, preferably 0.5 to 10% by mass, and more preferably 2 to 5% by mass.

### [Disperse Dyes]

The ink composition according to the present embodiment contains a disperse dye. The disperse dye is also referred to as an oil-soluble dye, and is an organic coloring matter which can dye fibers by way of an appropriate dyeing method. Examples of the disperse dye include: C.I. Disperse Yellow 3, 4, 5, 6, 7, 8, 9, 13, 23, 24, 30, 33, 34, 39, 42, 44, 49, 50, 51, 54, 56, 58, 60, 63, 64, 66, 68, 71, 74, 76, 79, 82, 83, 85, 86, 88, 90, 91, 93, 98, 99, 100, 104, 114, 116, 118, 119, 122, 124, 126, 135, 140, 141, 142, 149, 160, 162, 163, 164, 165, 179, 180, 182, 183, 186, 192, 198, 199, 200, 202, 204, 210, 211, 215, 216, 218, 224, and 237; C.I. Disperse Orange 1, 1:1, 3, 5, 7, 11, 13, 17, 20, 21, 23, 25, 29, 30, 31, 32, 33, 37, 38, 42, 43, 44, 45, 47, 48, 49, 50, 53, 54, 55, 56, 57, 58, 59, 60, 61, 66, 71, 73, 76, 78, 80, 86, 89, 90, 91, 93, 96, 97, 118, 119, 127, 130, 139, and 142; C.I. Disperse Red 1, 4, 5, 7, 11, 12, 13, 15, 17, 27, 43, 44, 50, 52, 53, 54, 55, 55:1, 56, 58, 59, 60, 65, 70, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 158, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 283, 288, 298, 302, 303, 310, 311, 312, 320, 323, 324, 328, and 359; C.I. Disperse Violet 1, 4, 8, 11, 17, 23, 26, 27, 28, 29, 31, 33, 35, 36, 38, 40, 43, 46, 48, 50, 51, 52, 56, 57, 59, 61, 63, 69, 77, and 97; C.I. Disperse Green 9; C.I. Disperse Brown 1, 2, 4, 9, 13, 19, and 27; C.I. Disperse Blue 3, 5, 7, 9, 14, 16, 19, 20, 26, 26:1, 27, 35, 43, 44, 54, 55, 56, 58, 60, 62, 64, 64:1, 71, 72, 72:1, 73, 75, 77, 79, 79:1, 82, 83, 87, 91, 93, 94, 95, 96, 102, 106, 108, 112, 113, 115, 118, 120, 122, 125, 128, 130, 131, 139, 141, 142, 143, 145, 146, 148, 149, 153, 154, 158, 165, 165:1, 165:2, 167, 171, 173, 174, 176, 181, 183, 185, 186, 187, 189, 197, 198, 200, 201, 205, 207, 211, 214, 224, 225, 257, 259, 266, 267, 270, 281, 284, 285, 287, 288, 291, 293, 295, 297, 301, 315, 330, 333, 341, 353, 354, 358, 359, 360, 364, 365, 366, 368; C.I. Disperse Black 1, 3, 10, and 24; C.I. Solvent Yellow 114; C.I. Solvent Orange 67; C.I. Solvent Red 146; C.I. Solvent Blue 36, 63, 83, 105, and 111; etc.

Among these disperse dyes, examples of preferred ones include C.I. Disperse Yellow 42, 49, 76, 83, 88, 93, 99, 119, 126, 160, 163, 165, 180, 183, 186, 198, 199, 200, 224, and 237; C.I. Disperse Orange 25, 29, 30, 31, 38, 42, 44, 45, 53, 54, 55, 71, 73, 80, 86, 96, 118, and 119; C.I. Disperse Red 73, 88, 91, 92, 111, 127, 131, 143, 145, 146, 152, 153, 154, 179, 191, 192, 206, 221, 258, 283, 302, 323, 328, and 359; C.I. Disperse Violet 26, 35, 48, 56, 77, and 97; C.I. Disperse Blue 27, 54, 60, 73, 77, 79, 79:1, 87, 143, 165, 165:1, 165:2, 181, 185, 197, 225, 257, 266, 267, 281, 341, 353, 354, 358, 360, 364, 365, and 368; etc. Examples of preferred heat transferable dyes include C.I. Disperse Yellow 51, 54, 60, 82; C.I. Disperse Orange 5, 7, 20, 23, and 25; C.I. Disperse Red 4, 11, 50, 53, 59, 60, 239, 240, and 364; C.I. Disperse Violet 8, 11, 17, 26, 27, 28, and 36; C.I. Disperse Blue 3, 5, 26, 35, 55, 56, 72, 81, 91, 108, 334, 359, 360, and 366; C.I. Disperse Brown 27; C.I. Solvent Yellow 114; C.I. Solvent Orange 60 and 67; C.I. Solvent Red 146; C.I.Solvent Blue 36, 63, 83, 105, and 111;etc. Among these, C.I. Disperse Yellow 54, C.I. Disperse Red 60, C.I. Disperse Red 359 and C.I. Disperse Blue 360 are particularly preferred.

The ink composition according to the present embodiment contains, as the disperse dye, preferably at least one type selected from the group consisting of C.I. Disperse Yellow, C.I. Disperse Orange, C.I. Disperse Blue, C.I. Disperse Red, C.I. Disperse Violet, C.I. Disperse Green, C.I. Disperse Brown, and C.I. Solvent Black; more preferably at least one selected from the group consisting of C.I. Disperse Yellow 54, C.I. Disperse Blue 359, C.I. Disperse Blue 360, and C.I. Disperse Red 60, and most preferably at least one selected from the group consisting of C.I. Disperse Yellow 54, C.I. Disperse Blue 359, C.I. Disperse Blue 360, and C.I. Disperse Red 60.

One type of the disperse dye may be used alone, or two or more types thereof may be used in combination. For example, in the preparation of a black ink, an orange dye, a red dye, a yellow dye, etc. are appropriately blended to a blue dye as a main dye, the color tone of the resulting mixture is adjusted to black color, and this can be used as a black dye. In addition, a plurality of dyes may be blended for the purpose of finely adjusting color tones such as blue, orange, red, violet, and black to a more preferred color tone.

The disperse dye may be a powdery or lumpy dry coloring material and may be a wet cake or a slurry. In addition, the disperse dye may contain a small amount of a dispersant such as a surfactant for the purpose of suppressing aggregation of the coloring matter particles during or after synthesis of the coloring matter. Further, the ink composition according to the present embodiment may contain a small amount of another water-insoluble coloring matter for the purpose of adjusting the color tone. Commercially available coloring matters are classified to several grades, such as for industrial dyeing, for resin coloring, for ink, for toner, for inkjet, and the like, and the respective grades differ in manufacturing method, purity, particle size of pigments, and the like. In order to suppress cohesiveness after pulverization, those having smaller particles are preferred as the coloringmatter, and those having as little impurities as possible from the influence on the dispersion stability and the ejection accuracy of the ink are preferred.

### [Dispersants]

The ink composition according to the present embodiment contains a dispersant. Examples of the dispersant include styrene-(meth)acrylic copolymers as well as other anionic dispersants and nonionic dispersants. One type of the dispersant may be used alone, or two or more types thereof may be used in combination.

The styrene-(meth)acrylic copolymer is a copolymer of a styrene-based monomer and a (meth)acrylic monomer. Specific examples of these copolymers include (a-methyl)styrene-acrylic acid copolymers, (a-methyl)styrene-acrylic acid-acrylate ester copolymers, (a-methyl)styrene-methacrylic acid copolymers, (α-methyl)styrene-methacrylic acid-acrylate ester copolymers, (α-methyl)styrene-maleic anhydride/acid copolymers, acrylate ester-maleic anhydride/acid copolymers, (a-methyl)styrene-acrylate ester-maleic anhydride/acid copolymers, acrylate ester-allylsulfonate ester copolymers, acrylate ester-styrenesulfonic acid copolymers, (a-methyl)styrene-methacrylsulfonic acid copolymers, polyester-acrylic acid copolymers, polyester-acrylic acid-acrylate ester copolymers, polyester-methacrylic acid copolymers, polyester-methacrylic acid-acrylic acid copolymers, and the like. Among these, a copolymer in which the compound including an aromatic hydrocarbon group is styrene is preferred. Note that "(meth)acryl" is used in this specification as meaning that "acryl" and "methacryl" are included. In addition, "(α-methyl)styrene" is used as meaning that "a-methylstyrene" and "styrene" are included.

The mass average molecular weight of the styrene-(meth)acrylic copolymer is, for example, preferably 1,000 to 20,000, more preferably 2,000 to 19,000, and most preferably 4,000 to 17,000. The mass average molecular weight of the styrene-(meth)acrylic copolymer is measured by a GPC (gel permeation chromatography) method.

Further, the acid value of the styrene-(meth)acrylic copolymer is, for example, preferably 50 to 250 mg KOH/g, more preferably 100 to 250 mg KOH/g, and most preferably 150 to 250 mg KOH/g. By setting the acid value to 50 mg KOH/g or more, solubility in water tends to be good, and the dispersion stabilizing ability of the disperse dye tends to be improved. Further, by setting the acid value to 250 mg KOH/g or less, affinity with an aqueous medium is suppressed, and occurrence of blurring in an image after printing tends to be suppressed. The acid value of the resin represents the number of mg of KOH required to neutralize 1 g of the resin, and is measured according to JIS-K3054.

Further, the glass transition temperature of the styrene-(meth)acrylic copolymer is preferably, for example, 45 to 135°C , more preferably 55 to 120°C , and most preferably 60 to 110°C.

Commercially available products of the styrene-(meth)acrylic copolymers include Joncryl ^{RTM} 67, 678, 680, 682, 683, 690, 52J, 57J, 60J, 63J, and 70J, JDX-6180, HPD-196, HPD96J, PDX-6137A, 6610, JDX-6500, JDX-6639, PDX-6102B, PDX-6124 (manufactured by BASF), and the like. Among these, Joncryl 67 (mass average molecular weight: 12,500, acid value: 213 mg KOH/g), 678 (mass average molecular weight: 8,500, acid value: 215 mg KOH/g), 682 (mass average molecular weight: 1,700, acid value: 230 mg KOH/g), 683 (mass average molecular weight: 4,900, acid value: 215 mg KOH/g), and 690 (mass average molecular weight: 16,500, acid value: 240 mg KOH/g) are preferred, and Joncryl 678 is the most preferred. Note that, in this specification, the superscripted RTM means a registered trademark.

Dispersion of a disperse dye can be carried out, for example, by the following method. That is, a styrene-(meth)acrylic copolymer is fed into a water-soluble organic solvent, and a temperature is increased to 90 to 120°C to prepare a solution containing a styrene-(meth)acrylic copolymer dissolved. An alkaline compound and water are fed into the styrene-(meth)acrylic copolymer solution prepared, the temperature is lowered to obtain an emulsion liquid, and a disperse dye is mixed into the obtained emulsion liquid obtained, followed by dispersion treatment.

Examples of the anionic dispersant include a formalin condensate of an aromatic sulfonic acid and ligninsulfonic acid. Examples of the formalin condensate of aromatic sulfonic acid include formalin condensates of creosote oil sulfonic acid, cresol sulfonic acid, phenolsulfonic acid, β-naphthalenesulfonic acid, β-naphtholsulfonic acid, β-naphthalene sulfonic acid, β-naphtholsulfonic acid, cresol sulfonic acid, 2-naphthol-6-sulfonic acid, ligninsulfonic acid, etc. Among these, each of the formalin condensates of creosote oil sulfonic acid, β-naphthalenesulfonic acid, and lignin sulfonic acid is preferred.

The anionic dispersant can also be obtained as commercial products. For example, as the formalin condensate of β-naphthalenesulfonic acid, Demol N (manufactured by Kao Corporation) can be mentioned. Examples of the formalin condensates of creosote oil sulfonic acid include Lavelin W series and Demol C (all of which are manufactured by Kao Corporation). Examples of the formalin condensate of a special aromatic sulfonic acid include Demol SN-B (manufactured by Kao Corporation). Examples of the formalin condensate of methylnaphthalenesulfonic acid include Lavelin AN series (manufactured by DKS Co., Ltd.). Among these, Demol N, Lavelin AN series, and Lavelin W series are preferred; Demol N and Lavelin W are more preferred; and Lavelin W is the most preferred. Examples of the ligninsulfonic acid include Vanillex N, Vanillex RN, Vanillex G, Pearllex DP (all of which are manufactured by Nippon Paper Industries Co., Ltd.). Among these, Vanillex RN, Vanillex N, and Vanillex G are preferred.

Examples of the nonionic dispersant include ethylene oxide (EO) adducts of phytosterols and ethylene oxide adducts of cholestanol. In this specification, "phytosterol" is used as referring to inclusion of both "phytosterol" and "hydrogenated phytosterol". Examples of the ethylene oxide adduct of phytosterol include an ethylene oxide adduct of phytosterol and an ethylene oxide adduct of hydrogenated phytosterol. Similarly, "cholestanol" is used herein as referring to both inclusion of "cholestanol" and "hydrogenated cholestanol". Examples of the ethylene oxide adduct of cholestanol include an ethylene oxide adduct of cholestanol and an ethylene oxide adduct of hydrogenated cholestanol. An added amount of ethylene oxide is preferably about 10 to 50 moles per mole of phytosterol or cholestanol and phytosterol or cholestanol having an HLB of about 13 to 20 is preferred.

Nonionic dispersants are also available as a commercial product. For example, as the ethylene oxide adduct of phytosterol, NIKKOL ^{RTM} BPS-20, NIKKOL ^{RTM} BPS-30 (both manufactured by Nikko Chemicals Co., Ltd.). NIKKOL ^{RTM} BPSH-25 (manufactured by Nikko Chemicals Co., Ltd.) is mentioned as an adduct of Ethylene Oxide of the hydrogenated phytosterol. Examples of the ethylene oxide adduct of cholestanol include NIKKOL ^{RTM} DHC-30 (manufactured by Nikko Chemicals Co., Ltd.).

Both of the anionic dispersant and the nonionic dispersant may be used in the form of salts. Examples of the salt include a salt with an alkali metal cation, and examples thereof include sodium salts, lithium salts, potassium salts, etc.

The ink composition according to the present embodiment preferably contains, as the dispersant, a styrene-(meth)acrylic copolymer or a formalin condensate of an aromatic sulfonic acid or a salt thereof, and more preferably contains a styrene-(meth)acrylic copolymer.

### [Other Components]

In addition to the above components, the ink composition according to the present embodiment may contain an ink preparation agent such as a water-soluble organic solvent, an antiseptic and antifungal agent, a water-soluble ultraviolet absorbing agent, a pH adjusting agent, a surface tension adjusting agent, water, etc.

Examples of the water-soluble organic solvent include glycol-based solvents, polyhydric alcohols, pyrrolidones, etc. Examples of the glycol-based solvent include glycerin, polyglycerin (#310, #750, #800), diglycerin, triglycerin, tetraglycerin, pentaglycerin, hexaglycerin, heptaglycerin, octaglycerin, nonaglycerin, decaglycerin, undecaglycerin, dodecaglycerin, tridecaglycerin, tetradecaglycerin, etc. Examples of the polyhydric alcohol include C2 to C6 polyhydric alcohols having 2 to 3 alcoholic hydroxy groups (provided that the above-mentioned straight chain diol compounds are excluded), di- or tri-C2 to C3 alkylene glycols, poly C2 to C3 alkylene glycols having 4 or more repeating units and having a molecular weight of about 20,000 or less (preferably a liquid polyalkylene glycol), etc. Examples of the polyhydric alcohol include ethylene glycol, propylene glycol, polypropylene glycol, 1,3-propanediol, 1,2-butanediol, thiodiglycol, 1,3-butanediol, 2,3-butanediol, 3-methyl-1,3-butanediol, 1,2-pentanediol, 2-methyl-2,4-pentanediol, 1,2-hexanediol, glycerin, trimethylolpropane, 1,3-pentanediol, etc. Examples of the pyrrolidone include 2-pyrrolidone, N-methyl-2-pyrrolidone, etc. Further, a compound or the like which is dissolved in water and serves as a wetting agent is also included in the water-soluble organic solvent for convenience. Examples of such a compound include urea, ethylene urea, saccharides, etc.

Considering the storage stability of the ink composition, a solvent having a low solubility with regard to the disperse dye is preferable. In particular, it is preferred to use glycerin and a solvent other than glycerin (preferably a polyhydric alcohol other than glycerin) in combination.

Examples of the antiseptic and antifungal agent include organic nitrogen and sulfur-based compounds, organic halogen-based compounds, haloallylsulfone-based compounds, iodopropagyl-based compounds, N-haloalkylthio-based compounds, nitrile-based compounds, pyridine-based compounds, 8-oxyquinoline-based compounds, benzothiazole-based compounds, isothiazoline-based compounds, dithiol-based compounds, pyridine oxide-based compounds, nitropropane oxide-based compounds, organotin-based compounds, phenol-based compounds, quaternary ammonium salt-based compounds, triazine-based compounds, thiazine-based compounds, anilide-based compounds, adamantane-based compounds, dithiocarbamate-based compounds, brominated indanone-based compounds, benzyl bromoacetate-based compounds, inorganic salt-based compounds, and the like. Examples of the organic halogen-based compound include sodium pentachlorophenol and the like. Examples of the pyridine oxide-based compounds include 2-pyridinethiol-1-oxide sodium salt and the like. Examples of the isothiazoline-based compounds include 1,2-benzisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride, and the like. Examples of the other antiseptic and antifungal agent include sodium acetate, sodium sorbate, sodium benzoate, and Proxel ^{RTM} GXL (S) and Proxel ^{RTM} XL-2 (S), which are trade names of products manufactured by Arch Chemicals Inc.

Examples of the water-soluble ultraviolet absorbing agent include sulfonated benzophenone-based compounds, benzotriazol-based compounds, salicylic acid-based compounds, cinnamic acid-based compounds, triazine-based compounds, etc.

Examples of the pH adjusting agent include alkali hydroxides such as sodium hydroxide, potassium hydroxide, lithium hydroxide, etc.; tertiary amines such as triethanolamine, diethanolamine, dimethylethanolamine, diethylethanolamine, etc.; and the like.

Examples of the surface tension adjusting agent include surfactants. Examples of the type of the surfactant include anionic surfactants, cationic surfactants, amphoteric surfactants, nonionic surfactants, silicone-based, fluorine-based surfactants, etc.

Examples of the anionic surfactant include alkylsulfocarboxylic acid salts; α-olefinsulfonic acid salts; polyoxyethylenealkyl ether acetic acid salts; N-acylamino acids or salts thereof; N-acylmethyltaurine salts; alkylsulfate polyoxyalkyl ether sulfuric acid salts; alkylsulfate polyoxyethylenealkyl ether phosphoric acid salts; rosin acid soap; castor oil sulfate ester salts; lauryl alcohol sulfate ester salts; alkylphenolic phosphate esters; alkylated phosphate esters; alkylarylsulfonic acid salts; and sulfosuccinic acid type surfactants, such as diethyl sulfosuccinic acid salts, diethylhexyl sulfosuccinic acid salts, and dioctyl sulfosuccinic acid salts. Examples of commercially available products include Lipal (trade name) 8351, 860K, 870P, NTD, and MSC manufactured by Lion Corporation; Adeka Col (trade name) EC8600 manufactured by Adeka Corporation; Pelex (trade name) OT-P, CS, TA, and TR manufactured by Kao Corporation; Rikamild ES-100 and ES-200 and Rikasurf P-10, M-30, M-75, M-300, G-30, and G-600 manufactured by New Japan Chemical Co., Ltd.; Kohakunol L-300, L-40, L-400, and NL-400 manufactured by Toho Chemical Industry Co., Ltd., etc.

Examples of the cationic surfactant include 2-vinylpyridine derivatives and poly(4-vinylpyridine) derivatives.

Examples of the amphoteric surfactant include lauryl dimethylaminoacetic acid betaine, 2-alkyl-N-carboxymethyl-N-hydroxyethylimidazolinium betaine, coconut oil fatty acid amide propyl dimethylaminoacetic acid betaine, polyoctyl polyaminoethylglycine, imidazoline derivatives, and the like.

Examples of the nonionic surfactant include ethers, such as polyoxyethylene nonylphenyl ether, polyoxyethylene octylphenyl ether, polyoxyethylene dodecylphenyl ether, polyoxyethylene oleyl ether, polyoxyethylene lauryl ether, polyoxyethylene alkyl ether, etc.; esters, such as polyoxyethylene oleate, polyoxyethylene distearate, sorbitan laurate, sorbitan monostearate, sorbitan monooleate, sorbitan sesquioleate, polyoxyethylene monooleate, polyoxyethylene stearate, etc.; acetylene glycols (alcohols), such as 2,4,7,9-tetramethyl-5-decyne-4,7-diol, 3,6-dimethyl-4-octyne-3,6-diol, 3,5-dimethyl-1-hexyn-3-ol, etc.; Surfynol (trade name) 104, 105, 82, 465, etc. manufactured by Air Products Japan Co., Ltd; and the like.

Examples of the silicone-based surfactant include polyether-modified siloxanes and polyether-modified polydimethylsiloxanes. Examples of commercially available products include BYK-347 (polyether-modified siloxane); BYK-345, BYK-348 (polyether-modified polydimethylsiloxane); and the like, all of which are manufactured by BYK.

Examples of the fluorine-based surfactant include perfluoroalkylsulfonic acid compounds, perfluoroalkylcarboxylic acid-based compounds, perfluoroalkylphosphate ester compounds, perfluoroalkylethylene oxide adducts, a polyoxyalkylene ether polymer compounds having a perfluoroalkylether group in its side chain, etc. Examples of commercially available products include Zonyl TBS, FSP, FSA, FSN-100, FSN, FSO-100, FSO, FS-300, Capstone FS-30 and FS-31 (all of which are manufactured by DuPont Co., Ltd.); PF-151N and PF-154N (both of which are manufactured by Omnova Solutions Inc.); and the like.

The water used for preparing the ink composition is preferably one having fewer impurities such as ion-exchanged water and distilled water.

### [Method for Preparing Ink Composition, etc.]

The method for preparing the ink composition according to the present embodiment is not particularly limited, and examples thereof include a method comprising preparing an aqueous dispersion of a disperse dye and then adding a straight chain diol compound and an ink preparation agent such as a water-soluble organic solvent, and the like.

Examples of a method of preparing an aqueous dispersion of a disperse dye include a known method such as stirring and mixing each component constituting the aqueous dispersion using a sand mill (bead mill), a roll mill, a ball mill, a paint shaker, an ultrasonic disperser, a microfluidizer, or the like. Since foaming may occur when preparing an aqueous dispersion of a disperse dye, a defoaming agent such as a silicone-based defoaming agent or an acetylene alcohol-based defoaming agent may be added if necessary. However, since some of the defoaming agents inhibit dispersion or microparticulation of the disperse dye, it is preferable to use those which do not affect microparticulation, stability of the aqueous dispersion, and the like. Preferred defoaming agents include, for example, an Olfine series (SK-14 or the like) manufactured by Nissin Chemical Industry Co., Ltd.; Surfynol series (104, DF-110D, or the like) manufactured by Air Products Japan Co., Ltd.; and the like.

The content of the disperse dye in the aqueous dispersion is typically 10 to 60% by mass, preferably 10 to 50% by mass, more preferably 10 to 40% by mass, and most preferably 15 to 30% by mass, based on the total mass of the aqueous dispersion. In addition, the content ratio of the dispersant in the aqueous dispersion is typically 1 to 36% by mass, preferably 4 to 30% by mass, and more preferably 4 to 20% by mass, based on the total mass of the aqueous dispersion.

The content ratio of the aqueous dispersion in the ink composition according to the present embodiment is typically 5 to 85% by mass, preferably 10 to 85% by mass, and more preferably 14 to 80% by mass, based on the total mass of the ink composition. Further, the content ratio of the straight chain diol compound is preferably 0.5 to 10% by mass, and more preferably 2 to 5% by mass. Furthermore, the content ratio of the water-soluble organic solvent (provided that the straight chain diol compound is excluded) is typically 5 to 50% by mass, preferably 5 to 40% by mass, more preferably 5 to 30% by mass, and most preferably 10 to 30% by mass. Furthermore, the total content of the ink preparation agent other than the water-soluble organic solvent is typically 0 to 25% by mass, and preferably 0.01 to 20% by mass.

The ink composition prepared is preferably subjected to microfiltration for the purpose of preventing clogging of the nozzles of the inkjet printer. The pore size of the filter used for microfiltration is typically 0.1 to 1.0 µm, and preferably 0.1 to 0.8 µm.

It is preferable for the ink composition according to the present embodiment to be adjusted to have appropriate physical property values in consideration of discharge amount, response speed, ink droplet flight characteristics, and the like of the inkjet printer to be used. The viscosity of the ink composition according to the present embodiment at 25°C is preferably about 3 to 20 mPa·s when measured by an E-type viscometer, from the viewpoint of discharge response characteristics at high speed. Further, the surface tension of the ink composition according to the present embodiment at 25°C is preferably about 20 to 45 mN/m as measured by the plate method.

Although the ink composition according to the present embodiment can be used in various fields, it is suitable for an aqueous ink for writing, an aqueous printing ink, an information recording ink, a textile printing, and the like.

The ink composition according to the present embodiment is excellent in storage stability without solid precipitation, change in physical properties, change in color, and the like after storage for a long period of time. In addition, an initial filling property to an inkjet printer head is favorable, and stability in continuous printing, initial ejection property, intermittent ejection property, and redispersibility are also favorable. Moreover, a clear image can be obtained without blurring of the image on a paper after printing; there is no odor on the paper after printing; and there is little influence on odor on a printed matter and a printing work environment. In addition to these, images recorded with the ink composition according to the present embodiment have excellent ozone gas resistance, high printing concentration, small color rendering, a low saturation, few white streaks, and color hue of high quality. Further, the images are excellent in various fastnesses, such as light resistance, moisture resistance, and water resistance. Furthermore, it is possible to perform inkjet textile printing in full color, which is excellent in various fastnesses and preservation property, by combining the ink composition according to the present embodiment with ink compositions each comprising a yellow dye, an orange dye, a magenta dye, a cyan dye, a black dye, or the like. As described above, the ink composition according to the present embodiment is suitable especially as an ink for inkjet printing.

### <Method for textile printing Hydrophobic Fibers>

The method for textile printing of hydrophobic fibers according to the present embodiment is a method in which the ink composition according to the present embodiment is used as an ink and hydrophobic fibers are printed using the ink. The hydrophobic fibers include, for example, polyester fibers, nylon fibers, triacetate fibers, diacetate fibers, polyamide fibers, and mixed spun fibers using two or more species of these fibers, and the like. In addition, fibers obtained by mix-spinning these hydrophobic fibers with regenerated fibers such as rayon, or natural fibers such as cotton, silk, wool, etc. are also included in the hydrophobic fibers in the present specification. Some of these fibers are known to have an ink-receiving layer (blurring prevention layer), and such fibers are also included in the hydrophobic fibers. Methods for forming an ink-receiving layer are known in the art, and fibers having an ink-receiving layer are also commercially available. The material, structure, and the like of the ink-receiving layer are not particularly limited, and may be used as appropriate depending upon the purpose and the like.

The textile printing methods of hydrophobic fibers are roughly classified into a direct printing method and sublimation transfer printing method.

The direct printing method includes: an attaching step, in which the ink composition according to the present embodiment is used as an ink and a droplet of the ink is attached to a hydrophobic fiber by an inkjet printer; a fixing step, in which a dye in the ink attached to the hydrophobic fiber in the attaching step is fixed to the hydrophobic fiber by way of heat; and a washing step, in which an unfixed dye remaining in the hydrophobic fiber is washed off.

The attaching step is generally performed by known steaming or baking. The steaming includes, for example, a method for dyeing and fixing (also referred to as wet heat fixing) a dye to the hydrophobic fiber by treating a hydrophobic fiber with a high-temperature steamer, typically at 170 to 180°C for about 10 minutes, or with a high-pressure steamer, typically at 120 to 130°C for about 20 minutes. The baking (thermosol) includes, for example, a method for dyeing and fixing (also referred to as dry heat fixing) a dye to a hydrophobic fiber by treating the fiber normally at 190 to 210°C for about 60 to 120 seconds.

The washing step is a step of washing off the obtained fiber with warm water and, if necessary, with ambient temperature water. The warm water or ambient temperature water to be used for washing may contain a surfactant. The washed fiber is also preferably dried, usually at 50 to 120°C for 5 to 30 minutes.

On the other hand, the sublimation transfer method includes: a printing step, in which the ink composition according to the present embodiment is used as ink and a droplet of the ink is attached to an intermediate recording medium by an inkjet printer to obtain a recorded image; and a transfer step, in which the recorded image is transferred to a hydrophobic fiber by contacting the hydrophobic fiber with a surface to which the ink is attached in the intermediate recording medium, followed by heat treatment.

As the intermediate recording medium, an intermediate recording medium in which the dye in the attached ink does not agglomerate on the surface thereof and sublimation of the dye is not hindered when the recorded image is transferred to the hydrophobic fibers is preferred. As an example of such an intermediate recording medium, a paper on the surface of which an ink-receiving layer is formed with inorganic fine particles such as silica may be mentioned, and a special paper for inkjet, or the like may be used.

The heat treatment in the transfer step typically includes dry heat treatment at about 190 to 200°C.

The method for printing a hydrophobic fiber according to the present embodiment may further include a pretreating step of pretreating the fiber for the purpose of preventing blurring or the like. This pretreating step includes a step of applying an aqueous solution (a pretreating liquid) containing a sizing material, an alkaline substance, a reduction inhibitor, and a hydrotropic agent to the hydrophobic fiber before the ink is attached.

Examples of the sizing agent include natural gums such as guar, locust bean, etc.; starches; marine algae such as sodium alginate, Gloiopeltis, etc.; plant skin such as pectic acid, etc.; fibrous derivatives such as methyl fibrin, ethyl fibrin, hydroxyethyl cellulose, carboxymethyl cellulose, etc.; processed starch such as carboxymethyl starch, etc.; synthetic glue such as polyvinyl alcohol and polyacrylate esters; and the like. Sodium alginate is preferable.

The alkaline substance includes, for example, alkali metal salts of inorganic acids or organic acids; salts of alkaline earth metals; compounds which liberate alkali when heated; and the like. Alkali metal hydroxides and alkali metal salts, which may be inorganic or organic, are preferable and examples include sodium compounds and potassium compounds. Examples include alkali metal hydroxides such as sodium hydroxide, calcium hydroxide, etc.; alkali metal salts of inorganic compounds such as sodium carbonate, sodium bicarbonate, potassium carbonate, sodium dihydrogen phosphate, disodium hydrogen phosphate, sodium phosphate, etc.; alkali metal salts of organic compounds such as sodium formate, sodium trichloroacetate, etc.; and the like. Sodium bicarbonate is preferable.

As the reduction inhibitor, sodium meta-nitrobenzenesulfonate is preferable. As the hydrotropic agent, ureas such as urea, dimethylurea, etc. may be exemplified, and urea is preferable.

With regard to the sizing agent, the alkaline substance, the reduction inhibitor, and the hydrotropic agent, any one type may be used alone, or two or more types may be used in combination.

The mixing ratio of each component in the pretreating liquid is, for example, 0.5 to 5% by mass of the sizing agent, 0.5 to 5% by mass of sodium bicarbonate, 0 to 5% by mass of sodium meta-nitrobenzenesulfonate, 1 to 20% by mass of urea, and the balance of water.

Methods of attaching the pretreating liquid to hydrophobic fibers include, for example, a padding method. The aperture ratio of padding is preferably about 40 to 90%, and more preferably about 60 to 80%.

### EXAMPLES

In the following, the present invention is explained in more detail by way of the Examples; however, the present invention is not limited to these Examples. In the Examples, unless otherwise specified, "parts" indicates parts by mass and "%" indicates % by mass.

### [Preparation Example 1: Preparation of Emulsion Liquid]

To a mixture of 48% lithium hydroxide (3.2 parts), ion-exchanged water (56.8 parts) and propylene glycol (20 parts), 20 parts of Joncryl 678 (manufactured by BASF Corporation) were added, and the mixture was heated to 90 to 120°C and stirred for 5 hours to obtain an emulsion liquid of Joncryl 678.

### [Preparation Example 2: Preparation of Aqueous Dispersion 1]

A mixture of Kayaset Yellow AG (30 parts) (C.I. Disperse Yellow 54, manufactured by Nippon Kayaku Co., Ltd.) as the sublimable dye, the emulsion liquid (60 parts) of Joncryl 678 obtained in Preparation Example 1, Proxel GXL (0.2 parts), Surfynol 104PG50 (0.4 parts), and ion-exchanged water (24 parts) was subjected to dispersing treatment while cooling for about 15 hours in a sand mill including 0.2 mm diameter glass beads. To the liquid obtained, ion-exchanged water (60 parts) and the emulsion liquid (30 parts) of Joncryl 678 obtained in Preparation Example 1 were added to adjust the dye content to 15%, followed by filtration using a glass fiber filter paper GC-50 (manufactured by Toyo Roshi Kaisha, Ltd., pore size of the filter: 0.5 µm), to obtain aqueous dispersion 1.

### [Preparation Example 3: Preparation of Aqueous Dispersion 2]

A mixture of Kayaset Red B (30 parts) (C.I. Disperse Red 60, manufactured by Nippon Kayaku Co., Ltd.) as the sublimable dye, the emulsion liquid (60 parts) of Joncryl 678 obtained in Preparation Example 1, Proxel GXL (0.2 parts), Surfynol 104PG50 (0.4 parts), and ion-exchanged water (24 parts) was subjected to dispersing treatment while cooling for about 15 hours in a sand mill including 0.2 mm diameter glass beads. To the liquid obtained, ion-exchanged water (60 parts) and the emulsion liquid (30 parts) of Joncryl 678 obtained in Preparation Example 1 were added to adjust the dye content to 15%, followed by filtration using a glass fiber filter paper GC-50 (manufactured by Toyo Roshi Kaisha, Ltd., pore size of the filter: 0.5 µm), to obtain aqueous dispersion 2.

### [Preparation Example 4: Preparation of Aqueous Dispersion 3]

A mixture containing C.I. Disperse Blue 359 (manufactured by Sakai Industries) (30 parts) as the sublimable dye, the emulsion liquid (60 parts) of Joncryl 678 obtained in Preparation Example 1, Proxel GXL (0.2 parts), Surfynol 104PG50 (0.4 parts), and ion-exchanged water (24 parts) was subjected to dispersing treatment while cooling for about 15 hours in a sand mill including 0.2 mm diameter glass beads. To the liquid obtained, ion-exchanged water (60 parts) and the emulsion liquid (30 parts) of Joncryl 678 obtained in Preparation Example 1 were added to adjust the dye content to 15%, followed by filtration using a glass fiber filter paper GC-50 (manufactured by Toyo Roshi Kaisha, Ltd., pore size of the filter: 0.5 µm), to obtain aqueous dispersion 3.

### [Preparation Example 5: Preparation of Aqueous Dispersion 4]

A mixture of C.I. Disperse Blue 360 (manufactured by Sensient Technologies Corporation) (30 parts) as the sublimable dye, the emulsion liquid (60 parts) of Joncryl 678 obtained in Preparation Example 1, Proxel GXL (0.2 parts), Surfynol 104PG50 (0.4 parts), and ion-exchanged water (24 parts) was subjected to dispersing treatment while cooling for about 15 hours in a sand mill including 0.2 mm diameter glass beads. To the liquid obtained, ion-exchanged water (60 parts) and the emulsion liquid (30 parts) of Joncryl 678 obtained in Preparation Example 1 were added to adjust the dye content to 15%, followed by filtration using a glass fiber filter paper GC-50 (manufactured by Toyo Roshi Kaisha, Ltd., pore size of the filter: 0.5 µm), to obtain aqueous dispersion 4.

### [Preparation Example 6: Preparation of Aqueous Dispersion 5]

A mixture containing Kayaset Yellow AG (C.I. Disperse Yellow 54 manufactured by Nippon Kayaku Co., Ltd.) (30 parts) as the sublimable dye, Lavelin ^{RTM} W-40 (40% aqueous solution of formalin condensate of creosote oil sulfonic acid salt manufactured by DKS Co., Ltd.) (45 parts) as the anionic dispersant, NIKKOL ^{RTM} BPS-30 (30 mole-ethylene oxide adduct of phytosterol manufactured by Nikko Chemicals Co., Ltd.) (2 parts) as the nonionic dispersant, and ion-exchanged water (23 parts) was subjected to dispersing treatment while cooling for about 15 hours in a sand mill including 0.2 mm diameter glass beads. To the liquid obtained, ion-exchanged water (100 parts) was added to prepare an aqueous dispersion with a dye content of 15%. Then, the dispersion was filtered using a glass fiber filter paper GC-50 (manufactured by Toyo Roshi Kaisha, Ltd., pore size of the filter: 0.5 µm), to obtain aqueous dispersion 5, from which components with a large particle size have been removed.

### [Preparation Example 7: Preparation of Aqueous Dispersion 6]

A mixture containing Kayaset Red B (C.I. Disperse Red 60 manufactured by Nippon Kayaku Co., Ltd.) (30 parts) as the sublimable dye, Lavelin ^{RTM} W-40 (40% aqueous solution of formalin condensate of creosote oil sulfonic acid salt manufactured by DKS Co., Ltd.) (45 parts) as the anionic dispersant, NIKKOL ^{RTM} BPS-30 (30 mole-ethylene oxide adduct of phytosterol manufactured by Nikko Chemicals Co., Ltd.) (2 parts) as the nonionic dispersant, and ion-exchanged water (23 parts) was subjected to dispersing treatment while cooling for about 15 hours in a sand mill including 0.2 mm diameter glass beads. To the liquid obtained, ion-exchanged water (100 parts) was added to prepare an aqueous dispersion with a dye content of 15%. Then, the dispersion was filtered using a glass fiber filter paper GC-50 (manufactured by Toyo Roshi Kaisha, Ltd., pore size of the filter: 0.5 µm), to obtain aqueous dispersion 6, from which components with a large particle size have been removed.

### [Preparation Example 8: Preparation of Aqueous Dispersion 7]

A mixture containing C.I. Disperse Blue 359 ( manufactured by Sakai Industries) (30 parts) as the sublimable dye, Lavelin ^{RTM} W-40 (40% aqueous solution of formalin condensate of creosote oil sulfonic acid salt manufactured by DKS Co., Ltd.) (45 parts) as the anionic dispersant, NIKKOL ^{RTM} BPS-30 (30 mole-ethylene oxide adduct of phytosterol manufactured by Nikko Chemicals Co., Ltd.) (2 parts) as the nonionic dispersant, and ion-exchanged water (23 parts) was subjected to dispersing treatment while cooling for about 15 hours in a sand mill including 0.2 mm diameter glass beads. To the liquid obtained, ion-exchanged water (100 parts) was added to prepare an aqueous dispersion with a dye content of 15%. Then, the dispersion was filtered using a glass fiber filter paper GC-50 (manufactured by Toyo Roshi Kaisha, Ltd., pore size of the filter: 0.5 µm), to obtain aqueous dispersion 7, from which components with a large particle size have been removed.

### [Preparation Example 9: Preparation of Aqueous Dispersion 8]

A mixture containing C.I. Disperse Blue 360 (manufactured by Sensient Technologies Corporation) (30 parts) as the sublimable dye, Lavelin ^{RTM} W-40 (40% aqueous solution of formalin condensate of creosote oil sulfonic acid salt manufactured by DKS Co., Ltd.) (45 parts) as the anionic dispersant, NIKKOL ^{RTM} BPS-30 (30 mole-ethylene oxide adduct of phytosterol manufactured by Nikko Chemicals Co., Ltd.) (2 parts) as the nonionic dispersant, and ion-exchanged water (23 parts) was subjected to dispersing treatment while cooling for about 15 hours in a sand mill including 0.2 mm diameter glass beads. To the liquid obtained, ion-exchanged water (100 parts) was added to prepare an aqueous dispersion with a dye content of 15%. Then, the dispersion was filtered using a glass fiber filter paper GC-50 (manufactured by Toyo Roshi Kaisha, Ltd., pore size of the filter: 0.5 µm), to obtain aqueous dispersion 8, from which components with a large particle size have been removed.

### [Example 1: Preparation of Aqueous Yellow Ink]

The above-mentioned aqueous dispersion 1 (40 parts), glycerin (23 parts), triethylene glycol (2 parts), Proxel GXL (manufactured by Lonza KK), Surfynol 465 (manufactured by Nissin Chemical Industry Co., Ltd.), TEA-80 (manufactured by Junsei Chemical Industries, Ltd.), and ion-exchanged water were blended and stirred so that the composition obtained has the composition of Table 1, followed by filtration through a filter having a pore diameter of 5 µm to obtain an aqueous yellow ink of Example 1.

### [Example 2: Preparation of Aqueous Magenta Ink]

The above-mentioned aqueous dispersion 2 (40 parts), glycerin (23 parts), triethylene glycol (2 parts), Proxel GXL (manufactured by Lonza KK), Surfynol 465 (manufactured by Nissin Chemical Industry Co., Ltd.), TEA-80 (manufactured by Junsei Chemical Industries, Ltd.), and ion-exchanged water were blended and stirred so that the composition obtained has the composition of Table 1, followed by filtration through a filter having a pore diameter of 5 µm to obtain an aqueous magenta ink of Example 2.

### [Example 3: Preparation of Aqueous Cyan Ink]

The above-mentioned aqueous dispersion 3 (40 parts), glycerin (23 parts), diethylene glycol (2 parts), Proxel GXL (manufactured by Lonza KK), Surfynol 465 (manufactured by Nissin Chemical Industry Co., Ltd.), TEA-80 (manufactured by Junsei Chemical Industries, Ltd.), and ion-exchanged water were blended and stirred so that the composition obtained has the composition of Table 1, followed by filtration through a filter having a pore diameter of 5 µm to obtain an aqueous cyan ink of Example 3.

### [Example 4: Preparation of Aqueous Cyan Ink]

An aqueous cyan ink of Example 4 was obtained similarly to Example 3, except that triethylene glycol was added instead of diethylene glycol in Example 3.

### [Example 5: Preparation of Aqueous Cyan Ink]

An aqueous cyan ink of Example 5 was obtained similarly to Example 3, except that tetraethylene glycol was added instead of diethylene glycol in Example 3.

### [Example 6: Preparation of Aqueous Cyan Ink]

An aqueous cyan ink of Example 6 was obtained similarly to Example 3, except that 1,6-hexanediol was added instead of diethylene glycol in Example 3.

### [Example 7: Preparation of Aqueous Black Ink]

The above-mentioned aqueous dispersion 1 (15 parts), the above-mentioned aqueous dispersion 2 (30 parts), the above-mentioned aqueous dispersion 3 (5 parts), the above-mentioned aqueous dispersion 4 (20 parts), glycerin (15 parts), triethylene glycol (5 parts), Proxel GXL (manufactured by Lonza KK), Surfynol 465 (manufactured by Nissin Chemical Industry Co., Ltd.), TEA-80 (manufactured by Junsei Chemical Industries, Ltd.), and ion-exchanged water were blended and stirred so that the composition obtained has the composition of Table 2, followed by filtration through a filter having a pore diameter of 5 µm to obtain an aqueous black ink of Example 7.

### [Example 8: Preparation of Aqueous Black Ink]

An aqueous black ink of Example 8 was obtained similarly to Example 7, except that the added amount of glycerin was decreased to 10 parts and the added amount of triethylene glycol was increased to 10 parts in Example 7.

### [Example 9: Preparation of Aqueous Black Ink]

An aqueous black ink of Example 9 was obtained similarly to Example 7, except that 1,6-hexanediol (2 parts) was added instead of triethylene glycol (5 parts) in Example 7.

### [Example 10: Preparation of Aqueous Black Ink]

An aqueous black ink of Example 10 was obtained similarly to Example 7, except that the added amounts of glycerin and triethylene glycol were decreased to 12 parts and 2 parts, respectively and 1,6-hexanediol (2 parts) was added in Example 7.

### [Example 11: Preparation of Aqueous Black Ink]

An aqueous black ink of Example 11 was obtained similarly to Example 7, except that the added amounts of glycerin and triethylene glycol were decreased to 10 parts and 2 parts, respectively and 1,6-hexanediol (5 parts) was added in Example 7.

### [Example 12: Preparation of Aqueous Black Ink]

An aqueous black ink of Example 12 was obtained similarly to Example 7, except that the added amount of glycerin was increased to 17 parts and the added amount of triethylene glycol was decreased to 0.5 parts in Example 7.

### [Comparative Example 1: Preparation of Aqueous Yellow Ink]

The above-mentioned aqueous dispersion 1 (40 parts), glycerin (25 parts), Proxel GXL (manufactured by Lonza KK), Surfynol 465 (manufactured by Nissin Chemical Industry Co., Ltd.), TEA-80 (manufactured by Junsei Chemical Industries, Ltd.), and ion-exchanged water were blended and stirred so that the composition obtained has the composition of Table 3, followed by filtration through a filter having a pore diameter of 5 µm to obtain an aqueous yellow ink of Comparative Example 1.

### [Comparative Example 2: Preparation of Aqueous Magenta Ink]

The above-mentioned aqueous dispersion 2 (40 parts), glycerin (25 parts), Proxel GXL (manufactured by Lonza KK), Surfynol 465 (manufactured by Nissin Chemical Industry Co., Ltd.), TEA-80 (manufactured by Junsei Chemical Industries, Ltd.), and ion-exchanged water were blended and stirred so that the composition obtained has the composition of Table 3, followed by filtration through a filter having a pore diameter of 5 µm to obtain an aqueous magenta ink of Comparative Example 2.

### [Comparative Example 3: Preparation of Aqueous Cyan Ink]

The above-mentioned aqueous dispersion 3 (40 parts), glycerin (25 parts), Proxel GXL (manufactured by Lonza KK), Surfynol 465 (manufactured by Nissin Chemical Industry Co., Ltd.), TEA-80 (manufactured by Junsei Chemical Industries, Ltd.), and ion-exchanged water were blended and stirred so that the composition obtained has the composition of Table 3, followed by filtration through a filter having a pore diameter of 5 µm to obtain an aqueous cyan ink of Comparative Example 3.

### [Comparative Example 4: Preparation of Aqueous Cyan Ink]

An aqueous cyan ink of Comparative Example 4 was obtained similarly to Comparative Example 3, except that the added amount of glycerin was decreased to 23 parts and ethylene glycol (2 parts) was added in Comparative Example 3.

### [Comparative Example 5: Preparation of Aqueous Cyan Ink]

An aqueous cyan ink of Comparative Example 5 was obtained similarly to Comparative Example 3, except that the added amount of glycerin was decreased to 23 parts and 1,2-hexanediol (2 parts) was added in Comparative Example 3.

### [Comparative Example 6: Preparation of Aqueous Cyan Ink]

An aqueous cyan ink of Comparative Example 6 was obtained similarly to Comparative Example 3, except that the added amount of glycerin was decreased to 23 parts and 1,2-pentanediol (2 parts) was added in Comparative Example 3.

### [Comparative Example 7: Preparation of Aqueous Cyan Ink]

An aqueous cyan ink of Comparative Example 7 was obtained similarly to Comparative Example 3, except that the added amount of glycerin was decreased to 23 parts and trimethylolpropane (2 parts) was added in Comparative Example 3.

### [Comparative Example 8]

The above-mentioned aqueous dispersion 1 (15 parts), the above-mentioned aqueous dispersion 2 (30 parts), the above-mentioned aqueous dispersion 3 (5 parts), the above-mentioned aqueous dispersion 4 (20 parts), glycerin (18 parts), Proxel GXL (manufactured by Lonza KK), Surfynol 465 (manufactured by Nissin Chemical Industry Co., Ltd.), TEA-80 (manufactured by Junsei Chemical Industries, Ltd.), and ion-exchanged water were blended and stirred so that the composition obtained has the composition of Table 3, followed by filtration through a filter having a pore diameter of 5 µm to obtain an aqueous black ink of Comparative Example 8.

**[Table 1]**

| | Composition component | Example | | | | | |
|---|---|---|---|---|---|---|---|
| | | 1 | 2 | 3 | 4 | 5 | 6 |
| Coloring matter | Aqueousx dispersion 1 | 40 | | | | | |
| | Aqueousx dispersion 2 | | 40 | | | | |
| | Aqueousx dispersion 3 | | | 40 | 40 | 40 | 40 |
| | Aqueousx dispersion 4 | | | | | | |
| Water-soluble solvent | Ethylene glycol | | | | | | |
| | Diethylene glycol | | | 2 | | | |
| | Triethylene glycol | 2 | 2 | | 2 | | |
| | Tetraethylene glycol | | | | | 2 | |
| | 1,2-hexane diol | | | | | | |
| | 1,6-hexane diol | | | | | | 2 |
| | 1,2-pentane diol | | | | | | |
| | Trimethylol propane | | | | | | |
| Others | Glycerin | 23 | 23 | 23 | 23 | 23 | 23 |
| | Proxel GXL | 0.1 | 0.1 | 0.1 | 0.1 | 0.1 | 0.1 |
| | Surfynol 465 | 0.2 | 0.2 | 0.2 | 0.2 | 0.2 | 0.2 |
| | TEA-80 | 0.1 | 0.1 | 0.1 | 0.1 | 0.1 | 0.1 |
| | Ion-exchanged water | Balance | | | | | |
| Total | | 100 | 100 | 100 | 100 | 100 | 100 |

**[Table 2]**

| | Composition component | Example | | | | | |
|---|---|---|---|---|---|---|---|
| | | 7 | 8 | 9 | 10 | 11 | 12 |
| Coloring matter | Aqueousx dispersion 1 | 15 | 15 | 15 | 15 | 15 | 15 |
| | Aqueousx dispersion 2 | 30 | 30 | 30 | 30 | 30 | 30 |
| | Aqueousx dispersion 3 | 5 | 5 | 5 | 5 | 5 | 5 |
| | Aqueousx dispersion 4 | 20 | 20 | 20 | 20 | 20 | 20 |
| Water-soluble solvent | Ethylene glycol | | | | | | |
| | Diethylene glycol | | | | | | |
| | Triethylene glycol | 5 | 10 | | 2 | 2 | 0.5 |
| | Tetraethylene glycol | | | | | | |
| | 1,2-hexane diol | | | | | | |
| | 1,6-hexane diol | | | 2 | 2 | 5 | |
| | 1,2-pentane diol | | | | | | |
| | Trimethylol propane | | | | | | |
| Others | Glycerin | 15 | 10 | 15 | 12 | 10 | 17 |
| | Proxel GXL | 0.1 | 0.1 | 0.1 | 0.1 | 0.1 | 0.1 |
| | Surfynol 465 | 0.2 | 0.2 | 0.2 | 0.2 | 0.2 | 0.2 |
| | TEA-80 | 0.1 | 0.1 | 0.1 | 0.1 | 0.1 | 0.1 |
| | Ion-exchanged water | Balance | | | | | |
| Total | | 100 | 100 | 100 | 100 | 100 | 100 |

**[Table 3]**

| | Composition component | Comparative Example | | | | | | | |
|---|---|---|---|---|---|---|---|---|---|
| | | 1 | 2 | 3 | 4 | 5 | 6 | 7 | 8 |
| Coloring matter | Aqueousx dispersion 1 | 40 | | | | | | | 15 |
| | Aqueousx dispersion 2 | | 40 | | | | | | 30 |
| | Aqueousx dispersion 3 | | | 40 | 40 | 40 | 40 | 40 | 5 |
| | Aqueousx dispersion 4 | | | | | | | | 20 |
| Water-soluble solvent | Ethylene glycol | | | | 2 | | | | |
| | Diethylene glycol | | | | | | | | |
| | Triethylene glycol | | | | | | | | |
| | Tetraethylene glycol | | | | | | | | |
| | 1,2-hexane diol | | | | | 2 | | | |
| | 1,6-hexane diol | | | | | | | | |
| | 1,2-pentane diol | | | | | | 2 | | |
| | Trimethylol propane | | | | | | | 2 | |
| Others | Glycerin | 25 | 25 | 25 | 23 | 23 | 23 | 23 | 18 |
| | Proxel GXL | 0.1 | 0.1 | 0.1 | 0.1 | 0.1 | 0.1 | 0.1 | 0.1 |
| | Surfynol 465 | 0.2 | 0.2 | 0.2 | 0.2 | 0.2 | 0.2 | 0.2 | 0.2 |
| | TEA-80 | 0.1 | 0.1 | 0.1 | 0.1 | 0.1 | 0.1 | 0.1 | 0.1 |
| | Ion-exchanged water | Balance | | | | | | | |
| Total | | 100 | 100 | 100 | 100 | 100 | 100 | 100 | 100 |

The following evaluation tests were performed, using the respective inks prepared as described above. Results are indicated in the following Tables 4 and 5.

### [Redispersibility Evaluation]

2 µL of the respective inks prepared was measured and gently dropped into a Petri dish. The Petri dish to which the ink was added dropwise was allowed to stand for 1 hour at 60°C, dried, and then left at room temperature for 1 hour and allowed to cool. 2 mL of the same ink was added dropwise to the edge of the Petri dish, and the Petri dish was gently shaken. The degree of redispersion was evaluated on the basis of the following three evaluation criteria. Test results are indicated in Tables 4 and 5 below.

### - Evaluation Criteria -

A: The dried ink is completely softened by the ink itself and redispersed and no dry matter can be seen.
B: The dried ink is softened by the ink itself and redispersed but dry matter is seen.
C: The dried ink is not softened by the ink itself and not redispersed.

### [Initial Ejection Property Evaluation]

The respective inks prepared were filled into a Kyocera head-mounted inkjet printer, and 50% duty image printing was performed on shiny paper. Then, the printed matter was visually observed and evaluated on the basis of the following three evaluation criteria. Test results are indicated in Tables 4 and 5 below.

### - Evaluation Criteria -

A: No rubbing is observed on the upper portion of the printed matter.
B: Slight rubbing is observed on the upper portion of the printed matter.
C: Rubbing is clearly observed on the upper portion of the printed matter.

### [Intermittent Ejection Property Evaluation]

The respective inks prepared were filled into a Kyocera head-mounted inkjet printer, and 50% duty image printing including an intermittent interval(s) was performed on glossy paper. Then, the printed matter was visually observed and evaluated on the basis of the following three evaluation criteria. Test results are indicated in Tables 4 and 5 below.

### - Evaluation Criteria -

A: No rubbing is observed in the printed area after intermittence.
B: Slight rubbing is observed in the printed area after intermittence.
C: Rubbing is clearly observed in the printed area after intermittence.

### [Evaluation of White Streaks]

The respective inks prepared were filled into a Kyocera head-mounted inkjet printer, and solid printing was performed on SPF62 (manufactured by Mitsubishi Paper Mills Limited) as 50% duty image. Streaks on the printed paper were visually confirmed and evaluated on the basis of the following three evaluation criteria. Test results are shown in Tables 4 and 5 below.

### - Evaluation Criteria -

A: Almost no streaks are observed in the printed area.
B: A few streaks are observed in the printed area.
C: Streaks are clearly observed in the printed area.

**[Table 4]**

| Test | Example | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Redispersibility | A | A | A | A | A | A | A | A | A | A | A | B |
| Initial ejection property | A | A | A | A | A | A | B | B | A | A | A | B |
| Intermittent ejection property | A | A | A | A | A | A | B | B | A | A | A | B |
| White streak | A | A | A | A | A | A | B | B | B | A | A | B |

**[Table 5]**

| Test | Comparative Example | | | | | | | |
|---|---|---|---|---|---|---|---|---|
| | 1 | 2 | 3 | 4 | 5 | 6 | 7 | 8 |
| Redispersibility | B | B | B | B | B | B | B | B |
| Initial ejection property | B | B | B | B | B | B | B | C |
| Intermittent ejection property | B | B | B | B | B | B | B | C |
| White streak | C | C | C | C | C | C | C | C |

As is apparent from the results of Tables 4 and 5, the ink compositions of Examples 1 to 6, 10, and 11 exhibited good results in all of the evaluations of redispersibility evaluation, initial ejection property evaluation, intermittent ejection property evaluation, and evaluation of white streaks. In addition, the aqueous black inks of Examples 7 to 12 exhibited comparable or higher characteristics as compared with the aqueous black ink of Comparative Example 8. From these results, it can be seen that the ink compositions of Examples 1 to 12 are extremely useful as an ink for various recording purposes, particularly as an ink for inkjet textile printing.

## Claims

1. An ink composition for inkjet textile printing, comprising a straight chain diol compound having at least four carbon atoms and having hydroxy groups at both ends in molecular structure thereof, a disperse dye, and a dispersant.

2. The ink composition for inkjet textile printing according to claim 1, wherein the straight chain diol compound comprises at least one type selected from the group consisting of 1,6-hexanediol, diethylene glycol, triethylene glycol, tetraethylene glycol, and polyethylene glycol.

3. The ink composition for inkjet textile printing according to claim 1 or 2, wherein the straight chain diol compound comprises at least one type selected from the group consisting of 1,6-hexanediol and triethylene glycol.

4. The ink composition for inkjet textile printing according to any one of claims 1 to 3, wherein the content of the straight chain diol compound is 0.5 to 10% by mass.

5. The ink composition for inkjet textile printing according to any one claims 1 to 4, wherein the disperse dye is a sublimable dye.

6. The ink composition for inkjet textile printing according to any one of claims 1 to 5, wherein the disperse dye is at least one type selected from the group consisting of C.I. Disperse Yellow, C.I. Disperse Orange, C.I. Disperse Blue, C.I. Disperse Red, C.I. Disperse Violet, C.I. Disperse Green, C.I. Disperse Brown, and C.I. Disperse Black.

7. The ink composition for inkjet textile printing according to any one claims 1 to 6, wherein the disperse dye is at least one type selected from the group consisting of C.I. Disperse Yellow 54, C.I. Disperse Blue 359, C.I. Disperse Blue 360, and C.I. Disperse Red 60.

8. The ink composition for inkjet textile printing according to any one of claims 1 to 7, wherein the disperse dye comprises C.I. Disperse Yellow 54, C.I. Disperse Blue 359, C.I. Disperse Blue 360, and C.I. Disperse Red 60.

9. The ink composition for inkjet textile printing according to any one of claims 1 to 8, wherein the dispersant is a styrene-(meth)acrylic copolymer or a formalin condensate of an aromatic sulfonic acid or a salt thereof.

10. The ink composition for inkjet textile printing according to claim 9, wherein a mass average molecular weight of the styrene-(meth)acrylic copolymer is 1,000 to 20,000.

11. The ink composition for inkjet textile printing according to claim 9, wherein a mass average molecular weight of the styrene-(meth)acrylic copolymer is 2,000 to 19,000.

12. The ink composition for inkjet textile printing according to claim 9, wherein a mass average molecular weight of the styrene-(meth)acrylic copolymer is 4,000 to 17,000.

13. The ink composition for inkjet textile printing according to claim 9, wherein the formalin condensate of an aromatic sulfonic acid is at least one type selected from the group consisting of a formalin condensate of creosote oil sulfonic acid and a formalin condensate of methylnaphthalene sulfonic acid.

14. The ink composition for inkjet textile printing according to any one of claims 1 to 13, wherein the ink composition comprises a water-soluble organic solvent.

15. The ink composition for inkjet textile printing according to any one of claims 1 to 14, in which the ink composition comprises water.

16. A method for textile printing of a hydrophobic fiber, comprising:
an attaching step of using the ink composition for inkjet textile printing according to any one of claims 1 to 15 as an ink and attaching a droplet of the ink to a hydrophobic fiber by an inkjet printer;
a fixing step of fixing a dye in the ink, which has been attached to the hydrophobic fiber in the attaching step, to the hydrophobic fiber by heat; and
a washing step of washing an unfixed dye remaining in the hydrophobic fiber.

17. The method for textile printing of a hydrophobic fiber according to claim 16, wherein the method further comprises a pretreating step of pretreating the hydrophobic fiber by applying an aqueous solution comprising a sizing material, an alkaline substance, a reduction inhibitor, and a hydrotropic agent to the hydrophobic fiber before the ink is attached.

18. A method for textile printing of a hydrophobic fiber, comprising:
a printing step of using the ink composition for inkjet textile printing according to any one of claims 1 to 15 as an ink and attaching a droplet of the ink to an intermediate recording medium by an inkjet printer to obtain a recorded image; and
a transfer step of transferring the recorded image to the hydrophobic fiber by contacting the hydrophobic fiber with a surface to which the ink is attached in the intermediate recording medium, followed by heat treatment.

19. A dyed hydrophobic fiber obtained by the method for textile printing of a hydrophobic fiber according to any one of claims 16 to 18.
